# EUROPÄISCHE PATENTSCHRIFT

(11) **EP 0 855 069 B1**
(45) Veröffentlichungstag und Bekanntmachung des Hinweises auf die Patenterteilung: **28.04.1999**
(21) Anmeldenummer: 96925737.7
(22) Anmeldetag: 12.07.1996
(51) Int. Cl.: G07F 7/00, H04Q 11/04

(54) **Verfahren zur bargeldlosen Bezahlung von aus einem verteilten Datennetz abrufbaren Diensten**
Method for cashless payment of services that can be requested from a distributed data network
Procédé de paiement sans espèces pour les services pouvant être commandés à travers un réseau réparti de transmission de données

(43) Veröffentlichungstag der Anmeldung: 29.07.1998
(73) Patentinhaber: Seng, Ulrich, 82335 Berg (DE)
(72) Erfinder: Seng, Ulrich, 82335 Berg (DE)
(74) Vertreter: Schoppe, Fritz, Dipl.-Ing.
(86) Internationale Anmeldenummer: EP9603062
(87) Internationale Veröffentlichungsnummer: WO9802852

(56) Entgegenhaltungen:
- EP-A- 0 486 204
- EP-A- 0 501 697
- EP-A- 0 590 861
- EP-A- 0 618 539
- WO-A-96/08783
- WO-A-96/21192
- US-A- 5 181 238
- PROCEEDINGS OF THE USENIX WORKSHOP OF ELECTRONIC COMMERCE, 11.Juli 1995, Seiten 77-88, XP000579446 COX B ET AL: "NETBILL SECURITY AND TRANSACTION PROTOCOL"

## Beschreibung

Die vorliegende Erfindung befaßt sich mit Verfahren zur bargeldlosen Bezahlung von aus einem verteilten, nicht-verbindungsorientierten Datennetz abrufbaren Diensten und zum Übertragen der Dienste von einer zweiten Einheit zu einer ersten Einheit während einer bestehenden Verbindung von der ersten Einheit über ein verbindungsorientiertes Datennetz, das einen Signalisierungskanal und einen Nachrichten- /Datenkanal aufweist, und über das verteilte, nicht-verbindungsorientierte Datennetz zu der zweiten Einheit.

In einer besonderen Anwendung befaßt sich die Erfindung mit einem Verfahren zur bargeldlosen Bezahlung von aus dem Internet abrufbaren Diensten und zum Übertragen der Dienste von einem Lieferanten zu einem Anwender während einer bestehenden Verbindung von dem Anwender über das ISDN-Netz zum Internet und über das Internet zu dem Lieferanten.

Im Internet werden verschiedene Dienste, wie beispielsweise die Lieferung bestimmter Daten, gegen Bezahlung angeboten. In einer typischen Konstellation steht ein Anwendercomputer (nachfolgend als Anwender bezeichnet) über das ISDN-Netz, welches ein verbindungsorientiertes Datennetz ist, mit einem Knoten des Internet in Verbindung, welches seinerseits ein verteiltes, nicht-verbindungsorientiertes Datennetz darstellt. Wenn nun vom Anwender die Lieferung bestimmter, aus dem Internet abrufbarer Dienste gewünscht ist, so bedarf es typischerweise vorab einer bargeldlosen Bezahlung der gewünschten Dienste an den Lieferanten. Üblicherweise hat der die Dienste anbietende Lieferant vorab dem interessierten Anwender Bestellnummern oder Bestellstichworte der Dienste im Zusammenhang mit einer Kurzbeschreibung der Dienste zugänglich gemacht. Bei Bestellung eines interessierenden Dienstes übersendet nun typischerweise der Anwender die Bestellnummer oder das Bestellstichwort des interessierenden Dienstes zusammen mit vertraulichen Bankinformationen, wie beispielsweise die Kreditkartennummer, an den Lieferanten, um auf diese Weise eine bargeldlose Bezahlung der gewünschten Dienste zu veranlassen. Auch ist es möglich, daß der Besteller beim Lieferanten ein laufendes Konto hat, von dem bei Bestellung eines Dienstes unter Angabe einer das Konto betreffenden Geheimnummer eine Abbuchung vorgenommen wird.

Diese Art der Bestellung ist sicherheitstechnisch nicht unbedenklich, da es sich bei dem Internet, wie bereits erwähnt, um ein verteiltes, nicht-verbindungsorientiertes Datennetz handelt, bei dem grundsätzlich nicht ausgeschlossen werden kann, daß auch weitere Internetteilnehmer in unerwünschter Weise auf die über das Internet übertragenen Daten zugreifen.

Um derartige Sicherheitsprobleme bei der bargeldlosen Bezahlung von aus dem Internet gewünschten Diensten zu vermeiden, ist es auch denkbar, die Dienste beispielsweise zunächst auf dem Postweg oder Überweisungsweg zu bezahlen und somit eine Bezahlung außerhalb des Internetzugriffs des Anwenders zu veranlassen. Eine derartige Prozedur führt jedoch nötigerweise zu einer verzögerten und für den Anwender unbequemen Erlangung der gewünschten Dienste.

Die US-A-5181238 beschreibt ein Verfahren zum Liefern eines autorisierten Zugriffs eines Teilnehmers eines Telefonnetzes, d.h. eines verbindungsorientierten Netzes, auf einen Dienstanbieter. Gemäß der US-A-5181238 ist ein Datenbanksystem vorgesehen, das auf mehrere, gemeinsam verwaltete Dienstanbieter-Gruppen verteilt sein kann. Über das Datenbanksystem wird verifiziert, daß ein anrufender Teilnehmer für einen Zugriff auf einen der Dienstanbieter authorisiert ist. Nur autorisierte Anrufe werden dann zu dem Dienstanbieter weitergeleitet. Durch das Datenbanksystem ist es möglich, daß ein Teilnehmer nur eine PIN-Nummer für alle Dienstanbieter, auf die über die beschriebene Anordnung zugegriffen werden kann, in Erinnerung behalten muß.

Die WO-A-96/08783 beschreibt ein Bezahlungssystem, um es einem ersten Internet-Benutzer zu ermöglichen, eine Bezahlung zu einem zweiten Internet-Benutzer durchzuführen, beispielsweise für den Verkauf von Informationen, die über das Internet lieferbar sind. Die WO-A-96/08783 beschäftigt sich mit dem Sicherheitsproblem, das besteht, wenn Kreditkartennummern über das Internet übertragen werden. Bei dem bekannten System sendet der zweite Internet-Benutzer zusammen mit dem angeforderten Informationsprodukt eine Zahlungsanforderung über das Internet zu einem Eingangsabschnitt des Bezahlungssystems. Das Bezahlungssystem fragt daraufhin den ersten Benutzer über das Internet, ob er mit der Bezahlung fortfahren will. Falls der erste Benutzer mit ja antwortet, wird der erste Benutzer außerhalb des Internets belastet, während, wenn der Benutzer mit nein antwortet, der Benutzer für das Informationsprodukt nicht belastet wird. Das Bezahlungssystem informiert daraufhin den zweiten Benutzer und bezahlt den zweiten Benutzer nach dem Sammeln des Geldes von dem ersten Benutzer. Da gemäß der WO-A-96/08783 Finanzinformationen und Internet-Adreß-Informationen getrennt gehalten werden, derart, daß die Finanzinformationen für Internet-Benutzer nicht einsehbar sind, wird gemäß dem offenbarten System die Sicherheit erhöht.

Ausgehend von diesem Stand der Technik liegt der vorliegenden Erfindung daher die Aufgabe zugrunde, ein Verfahren zur bargeldlosen Bezahlung von aus einem verteilten, nicht-verbindungsorientierten Datennetz abrufbaren Diensten und zum Übertragen der Dienste zu schaffen, bei dem eine hohe Sicherheit bei der bargeldlosen Bezahlung gegen unerwünschten fremden Zugriff erreicht wird, wobei die Bezahlung während der bestehenden Verbindung von einer ersten Einheit über ein verbindungsorientiertes Datennetz und das verteilte, nicht-verbindungsorientierte Datennetz zu der zweiten Einheit abgewickelt werden soll.

Diese Aufgabe wird durch ein Verfahren gemäß Anspruch 1 sowie durch ein Verfahren gemäß Anspruch 2 gelöst.

Gemäß einem ersten Aspekt schafft die Erfindung ein Verfahren zur bargeldlosen Bezahlung von aus einem verteilten, nicht-verbindungsorientierten Datennetz abrufbaren Diensten und zum Übertragen der Dienste von einer zweiten Einheit zu einer ersten Einheit während einer bestehenden Verbindung von der ersten Einheit über ein verbindungsorientiertes Datennetz, das einen Signalisierungskanal und einen Nachrichten-/Datenkanal aufweist, und über das verteilte, nicht-verbindungsorientierte Datennetz zu der zweiten Einheit, bei dem vorzugsweise die Autorisierung der Lieferung der Dienste von der zweiten Einheit an die erste Einheit durch die zweite Einheit selbst überprüft wird, wobei die erste Einheit und die zweite Einheit direkt über das verbindungsorientierte Datennetz verbindbar sind, welches folgende Schritte aufweist:
- Aufbauen einer Verbindung von der ersten Einheit über den Nachrichten-/Datenkanal des verbindungsorientierten Datennetzes und über das verteilte, nicht-verbindungsorientierte Datennetz zu der zweiten Einheit;
- Übertragen der Rufnummer der ersten Einheit und einer einen gewünschten Dienst betreffenden Anforderung an die zweite Einheit über die aufgebaute Verbindung;
- Prüfen, ob die Rufnummer der ersten Einheit registriert ist;
- falls dies der Fall ist, Übertragen eines eine Autorisierung der ersten Einheit zum Abrufen des Dienstes von der zweiten Einheit darstellenden Autorisierungscodes von der zweiten Einheit direkt über den Signalisierungskanal des verbindungsorientierten Datennetzes zu der ersten Einheit;
- falls der Nachrichten-/Datenkanal des verbindungsorientierten Datennetzes zwischen der zweiten Einheit und der ersten Einheit frei ist, Aufbauen einer Verbindung zwischen der zweiten Einheit und der ersten Einheit,
   wobei die bargeldlose Bezahlung bewirkt wird, falls festgestellt wird, daß die Rufnummer der ersten Einheit registriert ist.

Gemäß einem zweiten Aspekt schafft die Erfindung ein Verfahren zur bargeldlosen Bezahlung von aus einem verteilten, nicht-verbindungsorientierten Datennetz abrufbaren Diensten und zum Übertragen der Dienste bei Autorisierung durch eine dritte Einheit von einer zweiten Einheit zu einer ersten Einheit während einer bestehenden Verbindung von der ersten Einheit über das verbindungsorientierte Datennetz, das einen Signalisierungskanal und einen Nachrichten-/Datenkanal aufweist, und über das verteilte, nicht-verbindungsorientierte Datennetz zu der zweiten Einheit, bei dem die Autorisierung der Datenlieferung oder Dienstlieferung von der zweiten Einheit an die erste Einheit durch eine externe, dritte Einheit erteilt wird, wobei die dritte Einheit über das verbindungsorientierte Datennetz direkt mit der ersten Einheit verbindbar ist, welches folgende Schritte aufweist:
- Aufbauen einer Verbindung von der ersten Einheit über den Nachrichten-/Datenkanal des verbindungsorientierten Datennetzes und über das verteilte, nicht-verbindungsorientierte Datennetz zu der zweiten Einheit;
- Übertragen der Rufnummer der ersten Einheit und einer einen gewünschten Dienst betreffenden Anforderung an die zweite Einheit über die aufgebaute Verbindung;
- Übertragen der Rufnummer der ersten Einheit und einer den gewünschten Dienst oder deren Preis betreffenden Information von der zweiten Einheit an die dritte Einheit;
- Prüfen, ob die Rufnummer der ersten Einheit bei der dritten Einheit registriert ist;
- falls dies der Fall ist, Übertragen eines eine Autorisierung der ersten Einheit zum Abrufen des Dienstes von der zweiten Einheit darstellenden Autorisierungscodes von der dritten Einheit direkt über den Signalisierungskanal des verbindungsorientierten Datennetzes zu der ersten Einheit; und
- falls der Nachrichten-/Datenkanal des verbindungsorientierten Datennetzes zwischen der dritten Einheit und der ersten Einheit frei ist, Aufbauen einer Verbindung zwischen der dritten Einheit und der ersten Einheit,
   wobei die bargeldlose Bezahlung bewirkt wird, falls festgestellt wird, daß die Rufnummer der ersten Einheit registriert ist.

Nachfolgend wird unter Bezugnahme auf die beiliegenden Zeichnungen ein bevorzugtes Ausführungsbeispiel der Erfindung näher erläutert. Es zeigen:

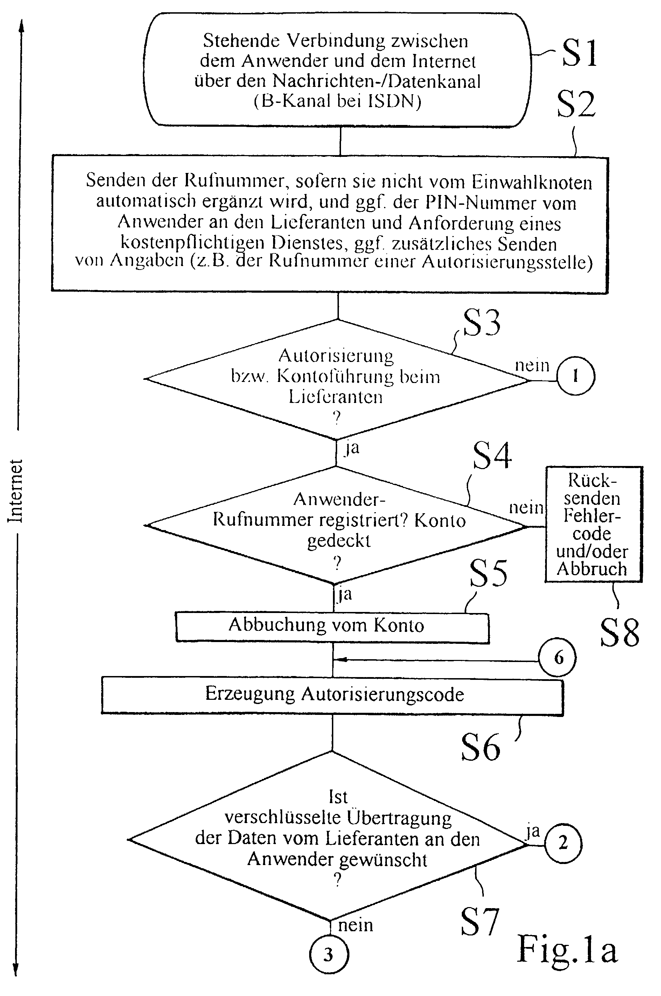

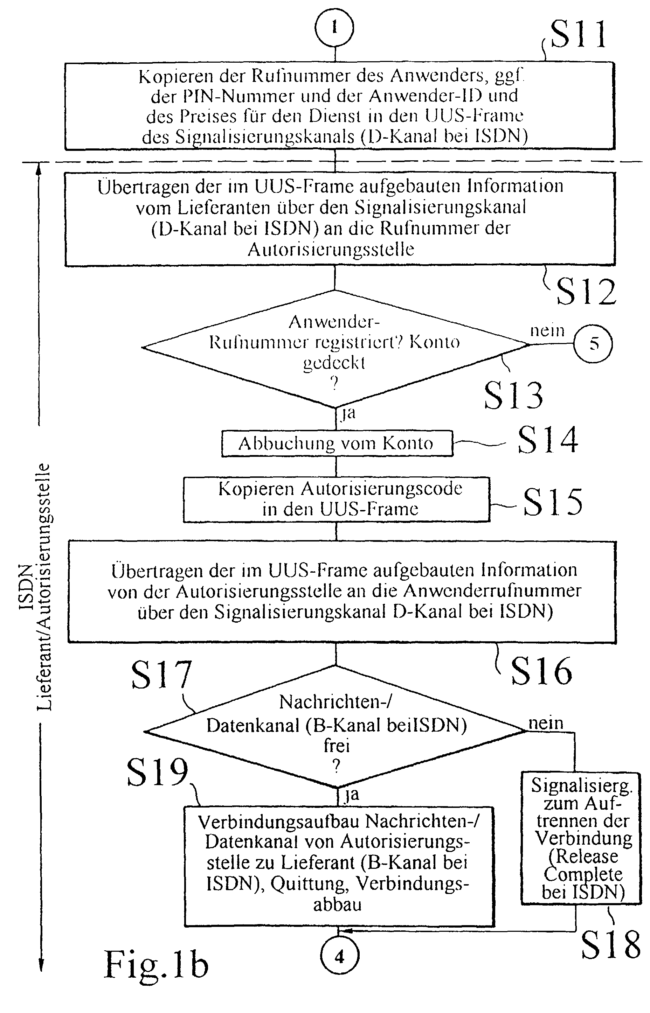

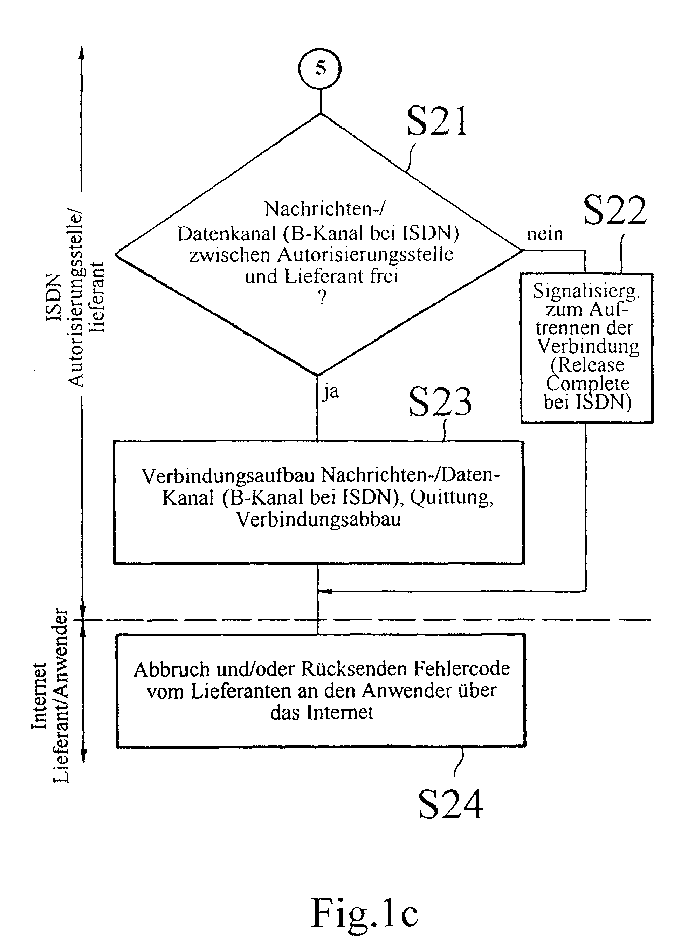

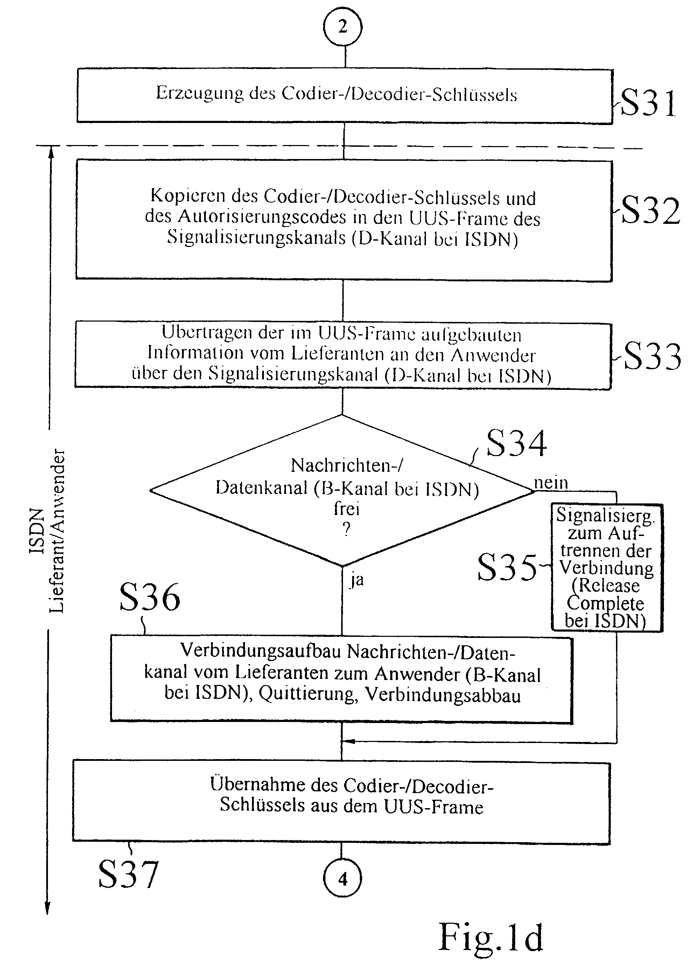

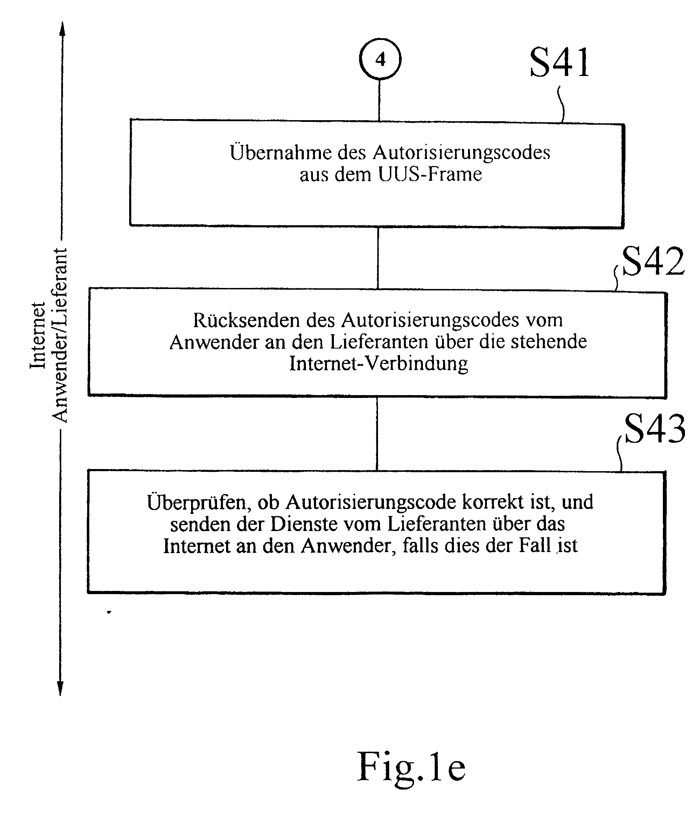

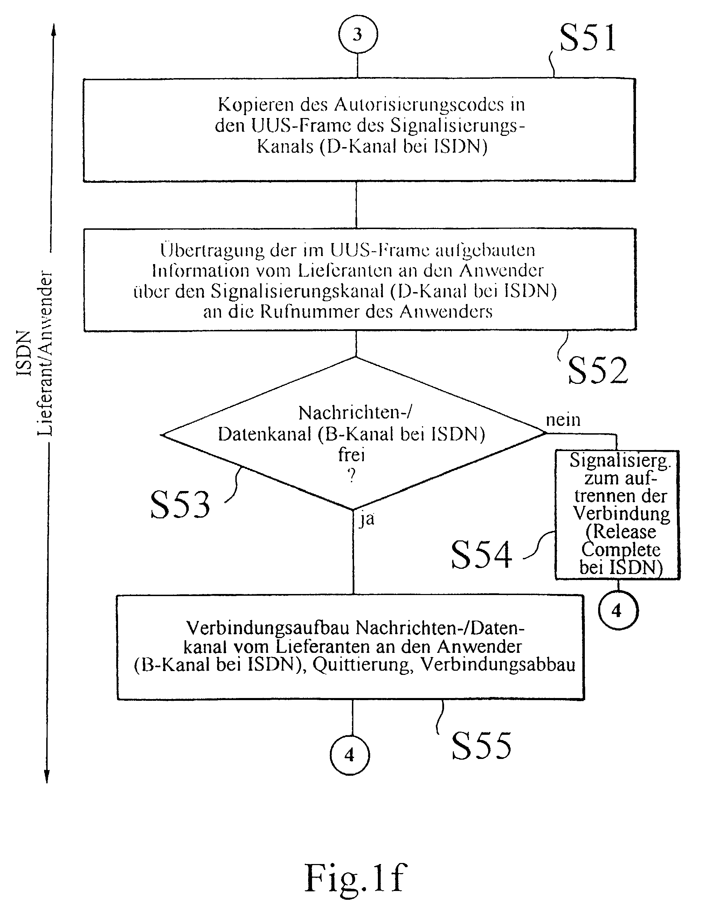

- Fig. 1a bis 1f: ein Flußdiagramm eines Ausführungsbeispiels des erfindungsgemäßen Verfahrens zur bargeldlosen Bezahlung von aus einem verteilten, nicht-verbindungsorientierten Datennetz abrufbaren Diensten; und
- Fig. 2: eine schematische Darstellung der Verbindungen, die durch das erfindungsgemäße Verfahren aufgebaut werden.

Das nunmehr zu erläuternde Ausführungsbeispiel des Verfahrens betrifft Datenverbindungen zwischen zwei oder drei Teilnehmern, die als erste und zweite und gegebenenfalls dritte Einheit bezeichnet werden und welche über das ISDN-Netz sowie das Internet zustande kommen. Bei dem beschriebenen Ausführungsbeispiel handelt es sich bei der ersten Einheit um den Anwender, bei der zweiten Einheit um eine Stelle, die Daten in das Internet liefert und hierfür die bargeldlose Bezahlung wünscht. Optional kann als dritte Einheit eine Autorisierungsstelle vorgesehen sein, obwohl es gleichfalls möglich ist, daß der Datenlieferant die Überprüfung und Erteilung der Autorisierung vornimmt. Die Datenübertragung zwischen dem Lieferanten bzw. der zweiten Einheit und dem Anwender bzw. der ersten Einheit kann verschlüsselt oder unverschlüsselt erfolgen. Bei dem nachfolgend erläuterten Flußdiagramm sind sämtliche der genannten Alternativen durch alternativ zu durchlaufende Äste des Flußdiagramms implementiert. Für den Fachmann ist es offensichtlich, daß in einer vereinfachten Ausführungsform Teile der genannten Alternativen fortfallen können, so daß die betreffenden Äste des Flußdiagramms für derartige vereinfachte Ausgestaltungen entfallen.

Das erfindungsgemäße Verfahren geht in dem ersten Verfahrensschritt S1 von einer bei Nutzung des Internet stehenden Verbindung über den Nachrichten-/Datenkanal bzw. B-Kanal des ISDN zwischen einer ersten Einheit E1 und dem Internet 3 aus. Bei dem hier zu beschreibenden Ausführungsbeispiel besteht eine Datenverbindung über den B-Kanal des Datenweges 1 des ISDN-Netzes zwischen der ersten Einheit El und einem Knoten 5 des Internet 3, die den Zugang für die erste Einheit E1 in das Internet 3 bildet. Die zweite Einheit E2, welche nachfolgend auch als Lieferant bezeichnet wird, steht entweder direkt mit dem Internet 3 in Verbindung oder, wie dies bei dem hier gezeigten Ausführungsbeispiel der Fall ist, über einen weiteren Datenweg 2 des ISDN, der eine Verbindung der zweiten Einheit E2 mit einem weiteren Knoten 6 des Internet 3 darstellt.

Optional kann im Falle einer externen Autorisierungsstelle, welche auch als dritte Einheit E3 bezeichnet wird, eine weitere Datenverbindung über einen weiteren Datenweg 7 des ISDN zwischen der zweiten und dritten Einheit E2, E3 sowie eine zusätzliche Datenverbindung zwischen der ersten Einheit E1 und der dritten Einheit E3 über einen wiederum weiteren Datenweg 8 des ISDN hergestellt werden.

Bei der gemäß dem Schritt S1 stehenden Verbindung des Anwenders E1 mit dem Internet 3 über den Nachrichten-/Datenkanal bzw. B-Kanal des ISDN-Netzes sendet der Anwender bei Wunsch eines kostenpflichtigen Dienstes seine Rufnummer gegebenenfalls mit einer PIN-Nummer oder Geheimnummer an den Lieferanten und fordert in diesem Schritt S2 einen der angebotenen kostenpflichtigen Dienste an. Gegebenenfalls sendet der Anwender bei diesem Schritt S2 zusätzliche Angaben an den Lieferanten, z.B. die Rufnummer einer Autorisierungsstelle, bei der der Anwender ein laufendes Konto unterhält.

Es ist nicht erforderlich, daß der Anwender die Rufnummer, die an den Lieferanten zu übertragen ist, selbst erzeugt, falls der Einwahlknoten 5 die Anwenderrufnummer, die dem Einwahlknoten 5 aufgrund der bestehenden ISDN-Verbindung mit dem Anwender ohnehin vorliegt, selbsttätig an die zu übertragende PIN-Nummer bzw. die Anforderung des Dienstes anfügt. Mit anderen Worten ist es für das erfindungsgemäße Verfahren unmaßgeblich, durch welche Stelle die an den Lieferanten zu übertragende Rufnummer des Anwenders generiert wird.

Bei einem folgenden Schritt S3 prüft der Lieferant, ob im vorliegenden Fall die Autorisierung bzw. die Kontoführung durch den Lieferanten durchgeführt werden soll oder bei einer externen Autorisierungsstelle erfolgen soll. Falls die zweite Alternative vorliegt, fährt das Verfahren mit dem Schritt S11 fort. Anderenfalls fährt das Verfahren mit dem Schritt S4 fort, bei dem der Lieferant überprüft, ob die Rufnummer des Anwenders gegebenenfalls zusammenpassend mit dem Anwendernamen und gegebenenfalls zusammenpassend mit der PIN-Nummer des Anwenders registriert sind und ob ein laufendes Konto des Anwenders beim Lieferanten zumindest in Höhe der Kosten, die für den geforderten Dienst anfallen, gedeckt ist. Falls die genannte Prüfung negativ verläuft, fährt das Programm mit dem Schritt S8 fort, bei dem der Lieferant einen Fehlercode an den Anwender zurücksendet und/oder einen Abbruch der Verbindung durchführt.

Falls die Prüfung bei dem Schritt S4 positiv verläuft, wird eine Abbuchung des für den Dienst fälligen Betrages von dem Konto vorgenommen (S5), woraufhin bei dem Schritt S6 ein Autorisierungscode erzeugt wird.

Bei dem Schritt S7 prüft der Lieferant, ob vom Anwender eine verschlüsselte Übertragung der gewünschten Daten bzw. Dienste oder eine unverschlüsselte Übertragung der Daten bzw. Dienste gewünscht wird. Falls eine verschlüsselte Übertragung gewünscht wird, fährt das Verfahren mit dem Schritt S31 fort. Anderenfalls fährt das Verfahren mit dem Schritt S51 fort.

Bei dem Schritt S11 kopiert der Lieferant die Rufnummer des Anwenders sowie gegebenenfalls dessen PIN-Nummer sowie gegebenenfalls die Anwenderidentifikation und den Preis des geforderten Dienstes in den UUS-Frame des Signalisierungskanals bzw. D-Kanals des ISDN-Netzes.

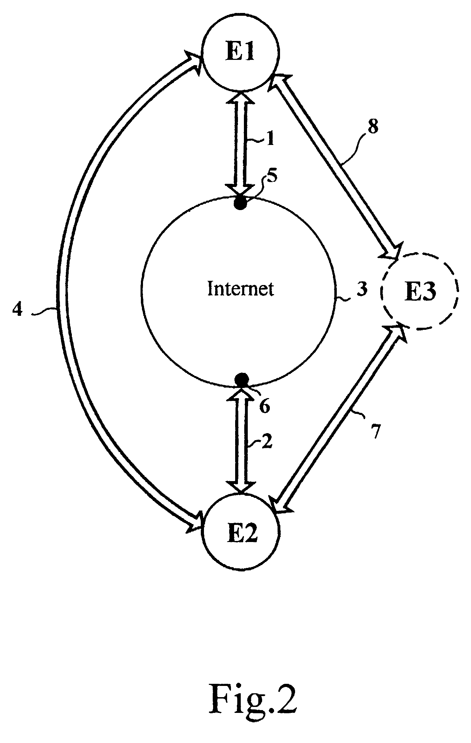

Bei dem darauffolgenden Schritt S12 überträgt der Lieferant die im UUS-Frame aufgebaute Information an die Autorisierungsstelle über den Signalisierungskanal bzw. den D-Kanal bei ISDN an die ihm vom Anwender mitgeteilte Rufnummer der Autorisierungsstelle. Beim Schritt S13 prüft die Autorisierungsstelle (Fig. 2; Bezugszeichen E3), ob die Anwender-Rufnummer registriert ist und das betreffende Konto gedeckt ist. Es können ferner die unter Bezugnahme auf den Schritt S4 beschriebenen Prüfungen durchgeführt werden. Falls die Prüfung bei dem Schritt S13 positiv verläuft, fährt das Verfahren mit dem Schritt S14 fort, bei dem die Abbuchung des Preises für den geforderten Dienst von dem Konto vorgenommen wird. Anderenfalls schreitet das Programm mit der Ausführung des Schrittes S21 fort. Bei dem Schritt S15 kopiert der Lieferant den Autorisierungscode in den UUS-Frame.

Bei dem Schritt S16 erfolgt die Übertragung der im UUS-Frame aufgebauten Information von der Autorisierungsstelle an die Anwender-Rufnummer über den Signalisierungskanal bzw. D-Kanal bei ISDN.

Bei dem Schritt S17 wird überprüft, ob der Nachrichten-/Datenkanal bzw. B-Kanal bei ISDN frei ist.

Falls das Ergebnis dieser Prüfung beim Schritt S17 negativ ist, erfolgt beim Schritt S18 eine Signalisierung zum Auftrennen der Verbindung bzw. die Prozedur "Release Complete" bei ISDN. Ist das Prüfergebnis beim Schritt S17 positiv, folgt der Schritt S19, bei dem zunächst ein Verbindungsaufbau zwischen der Autorisierungsstelle und dem Lieferanten über den Nachrichten-/Datenkanal bzw. B-Kanal bei ISDN vorgenommen wird, und eine Quittung von der Autorisierungsstelle an den Lieferanten über die Prüfung bezüglich der Autorisierung übermittelt wird, bevor ein Verbindungsabbau erfolgt. Im Anschluß an die Schritte S18 und S19 geht das Programm zum Schritt S41, der später erläutert wird.

Bei dem Schritt S21, mit dem das Verfahren bei einem negativen Prüfergebnis bei der Prüfung des Schritts S13 fortfährt, wird geprüft, ob der Nachrichten-/Datenkanal bzw. B-Kanal bei ISDN zwischen der Autorisierungsstelle und dem Lieferanten frei ist. Falls dies nicht der Fall ist, fährt das Verfahren mit dem Schritt S22 fort, bei dem die Signalisierung zum Auftrennen der Verbindung von der Autorisierungsstelle erzeugt wird. Im Falle des ISDN-Netzes handelt es sich um die Prozedur "Release Complete".

Falls die Prüfung gemäß Schritt S21 positiv verläuft, fährt das Verfahren mit dem Schritt S23 fort, bei dem zunächst ein Verbindungsaufbau über den Nachrichten-/Datenkanal bzw. B-Kanal bei ISDN herbeigeführt wird, woraufhin eine Quittung von dem Lieferanten an die Autorisierungsstelle geschickt wird, mit der die Übertragung der fehlenden Registrierung oder des nicht gedeckten Kontos bestätigt wird, bevor es zu einem Verbindungsabbau kommt.

Sowohl auf den Schritt S22 wie auch auf den Schritt S23 folgt der Schritt S24, bei dem der Lieferant über das Internet an den Anwender den Abbruch und/oder einen Fehlercode übermittelt, der beispielsweise die fehlende Registrierung des Anwenders oder die mangelnde Kontodeckung wiedergibt.

Falls die Überprüfung beim Schritt S7 positiv verläuft, also falls vom Anwender eine verschlüsselte Übertragung der Daten gewünscht ist, fährt das Programm mit dem Schritt S31 fort. Bei diesem Schritt wird zunächst ein Codier-/Decodier-Schlüssel erzeugt.

Bei dem folgenden Schritt S32 kopiert der Lieferant den Codier-/Decodier-Schlüssel und den Autorisierungscode in den UUS-Frame des Signalisierungskanals bzw. des D-Kanals bei ISDN. Bei dem Schritt S33 erfolgt das Übertragen der im UUS-Frame aufgebauten Information vom Lieferanten an den Anwender über den Signalisierungskanal bzw. D-Kanal bei ISDN.

Bei dem Schritt S34 wird geprüft, ob der Nachrichten-/Datenkanal bzw. B-Kanal bei ISDN zwischen dem Lieferanten und dem Anwender frei ist. Falls dies nicht der Fall ist, erfolgt beim Schritt S35 eine Signalisierung zum Auftrennen der Verbindung bzw. die Prozedur "Release Complete" bei ISDN. Anderenfalls erfolgt beim Schritt S36 der Verbindungsaufbau zwischen dem Lieferanten und dem Anwender über den Nachrichten-/Datenkanal bzw. B-Kanal bei ISDN, woraufhin der Anwender den Erhalt des Codier-/Decodier-Schlüssels und des Autorisierungscodes quittiert, woraufhin der Verbindungsabbau durchgeführt wird.

Beim Schritt S37 übernimmt der Anwender den Codier-/Decodier-Schlüssel aus dem UUS-Frame.

Bei dem darauffolgenden Schritt S41 übernimmt der Anwender den Autorisierungscode aus dem UUS-Frame. Bei dem darauffolgenden Schritt S42 sendet der Anwender den Autorisierungscode an den Lieferanten über die bestehende Internetverbindung. Beim Schritt S43 überprüft der Lieferant, ob der übertragene Autorisierungscode korrekt ist, und sendet die gewünschten Dienste bzw. Daten über das Internet an den Anwender.

Falls die Überprüfung beim Schritt S7 ergibt, daß der Anwender die Übersendung unverschlüsselter Daten wünscht, fährt das Verfahren mit dem Schritt S51 fort, bei dem der Autorisierungscode vom Lieferanten in den UUS-Frame des Signalisierungskanals bzw. D-Kanals bei ISDN kopiert wird. Bei dem Schritt S52 erfolgt die Übertragung der im UUS-Frame aufgebauten Information vom Lieferanten an den Anwender über den Signalisierungskanal bzw. D-Kanal des ISDN an die Rufnummer des Anwenders.

Beim Schritt S53 wird überprüft, ob der Nachrichten-/Datenkanal bzw. B-Kanal bei ISDN zwischen dem Lieferanten und dem Anwender frei ist. Falls dies nicht der Fall ist, erfolgt beim Schritt S54 die Signalisierung zum Auftrennen der Verbindung bzw. die Prozedur "Release Complete" bei ISDN, bevor das Verfahren mit dem Schritt S41 fortfährt. Falls die Überprüfung beim Schritt S53 positiv ist, fährt das Verfahren mit dem Schritt S55 fort, bei dem ein Verbindungsaufbau des Nachrichten-/Datenkanals vom Lieferanten an den Anwender bzw. des B-Kanals bei ISDN vorgenommen wird, bevor der Anwender die übertragene Information quittiert und ein Verbindungsabbau durchgeführt wird. Auch dann schreitet das Verfahren mit dem Schritt S41 fort.

## Patentansprüche

1. Verfahren zur bargeldlosen Bezahlung von aus einem verteilten, nicht-verbindungsorientierten Datennetz abrufbaren Diensten und zum Übertragen der Dienste von einer zweiten Einheit zu einer ersten Einheit während einer bestehenden Verbindung von der ersten Einheit über ein verbindungsorientiertes Datennetz, das einen Signalisierungskanal und einen Nachrichten-/Datenkanal aufweist, und über das verteilte, nicht-verbindungsorientierte Datennetz zu der zweiten Einheit, wobei die erste Einheit und die zweite Einheit direkt über das verbindungsorientierte Datennetz verbindbar sind, mit folgenden Schritten:
a1) Aufbauen (S1) einer Verbindung von der ersten Einheit (E1) über den Nachrichten-/Datenkanal des verbindungsorientierten Datennetzes und über das verteilte, nicht-verbindungsorientierte Datennetz zu der zweiten Einheit (E2);
b1) Übertragen (S2) der Rufnummer der ersten Einheit (E1) und einer einen gewünschten Dienst betreffenden Anforderung an die zweite Einheit (E2) über die im Schritt a1) aufgebaute Verbindung;
c1) Prüfen (S4), ob die Rufnummer der ersten Einheit (E1) registriert ist;
d1) falls dies der Fall ist, Übertragen (S33; S52) eines eine Autorisierung der ersten Einheit zum Abrufen des Dienstes von der zweiten Einheit darstellenden Autorisierungscodes von der zweiten Einheit (E2) direkt über den Signalisierungskanal des verbindungsorientierten Datennetzes zu der ersten Einheit (E1);
e1) falls der Nachrichten-/Datenkanal des verbindungsorientierten Datennetzes zwischen der zweiten Einheit (E2) und der ersten Einheit (E1) frei ist, Aufbauen einer Verbindung zwischen der zweiten Einheit (E2) und der ersten Einheit (E1),
wobei die bargeldlose Bezahlung bewirkt wird, falls im Schritt cl) festgestellt wird, daß die Rufnummer der ersten Einheit registriert ist.

2. Verfahren zur bargeldlosen Bezahlung von aus einem verteilten, nicht-verbindungsorientierten Datennetz abrufbaren Diensten und zum Übertragen der Dienste bei Autorisierung durch eine dritte Einheit von einer zweiten Einheit zu einer ersten Einheit während einer bestehenden Verbindung von der ersten Einheit über das verbindungsorientierte Datennetz, das einen Signalisierungskanal und einen Nachrichten-/Datenkanal aufweist, und über das verteilte, nicht-verbindungsorientierte Datennetz zu der zweiten Einheit, wobei die dritte Einheit über das verbindungsorientierte Datennetz mit der ersten Einheit verbindbar ist, mit folgenden Schritten:
a2) Aufbauen (S1) einer Verbindung von der ersten Einheit (E1) über den Nachrichten-/Datenkanal des verbindungsorientierten Datennetzes und über das verteilte, nicht-verbindungsorientierte Datennetz zu der zweiten Einheit;
b2) Übertragen (S2) der Rufnummer der ersten Einheit (E1) und einer einen gewünschten Dienst betreffenden Anforderung an die zweite Einheit (E2) über die im Schritt a2) aufgebaute Verbindung;
c2) Übertragen (S12) der Rufnummer der ersten Einheit (E1) und einer den gewünschten Dienst oder deren Preis betreffenden Information von der zweiten Einheit (E2) an die dritte Einheit (E3);
d2) Prüfen (S13), ob die Rufnummer der ersten Einheit bei der dritten Einheit (E3) registriert ist;
e2) falls dies der Fall ist, Übertragen (S16) eines eine Autorisierung der ersten Einheit zum Abrufen des Dienstes von der zweiten Einheit darstellenden Autorisierungscodes von der dritten Einheit (E3) direkt über den Signalisierungskanal des verbindungsorientierten Datennetzes zu der ersten Einheit (E1); und
f2) falls der Nachrichten-/Datenkanal des verbindungsorientierten Datennetzes zwischen der dritten Einheit (E3) und der ersten Einheit (E1) frei ist, Aufbauen einer Verbindung (S19) zwischen der dritten Einheit (E3) und der ersten Einheit (E1),
wobei die bargeldlose Bezahlung bewirkt wird, falls im Schritt d2) festgestellt wird, daß die Rufnummer der ersten Einheit registriert ist.

3. Verfahren nach Anspruch 1 oder 2, mit folgenden weiteren Schritten nach dem Schritt des Aufbauens (S36; S55; S19) einer Verbindung:
- Rücksenden (S42) des Autorisierungscodes von der ersten Einheit zu der zweiten Einheit;
- Prüfen (S43) durch die zweite Einheit, ob der Autorisierungscode korrekt ist; und
- falls dies der Fall ist, Senden (S43) der gewünschten Dienste von der zweiten Einheit über das verteilte, nicht-verbindungsorientierte Datennetz und über das verbindungsorientierte Datennetz zu der ersten Einheit (E1).

4. Verfahren nach einem der Ansprüche 1 bis 3, bei dem der Schritt des Prüfens (S4; S13), ob die Rufnummer der ersten Einheit (E1) registriert ist, den Schritt des Prüfens umfaßt, ob ein zu der Rufnummer der ersten Einheit (E1) zugehöriges Konto in Höhe der Abbuchung des Preises des gewünschten Dienstes gedeckt ist.

5. Verfahren nach Anspruch 3, bei dem der Schritt des Rücksendens (S42) des Autorisierungscodes das Rücksenden des Autorisierungscodes über das verteilte, nicht-verbindungsorientierte Datennetz von der ersten Einheit zu der zweiten Einheit umfaßt.

6. Verfahren nach einem der Ansprüche 1 bis 5, bei dem
- das verbindungsorientierte Datennetz das ISDN-Netz ist;
- der Nachrichten-/Datenkanal der B-Kanal des ISDN-Netzes ist; und
- der Signalisierungskanal der D-Kanal des ISDN-Netzes ist.

7. Verfahren nach einem der Ansprüche 1 bis 6, bei dem das verteilte, nicht-verbindungsorientierte Datennetz das Internet ist.

8. Verfahren nach einem der vorhergehenden Ansprüche, bei dem der Schritt des Übertragens (S2) der Rufnummer der ersten Einheit das Übertragen einer PIN-Nummer und/oder einer Anwender-Identifikation und/oder der Rufnummer einer für den Anwender zuständigen Autorisierungsstelle umfaßt.

9. Verfahren nach einem der vorhergehenden Ansprüche, mit folgendem zusätzlichen Schritt zwischen dem Schritt des Prüfens (S4), ob die Rufnummer der ersten Einheit (E1) registriert ist, und dem Schritt des Übertragens (S16; S33; S52) des Autorisierungscodes:
Prüfen (S7), ob vom Anwender die Übertragung der gewünschten Daten in verschlüsselter Form gewünscht ist, wobei in diesem Fall der Schritt des Übertragens (S33) das Übertragen eines Codierungs-/Decodierungs-Schlüssels über den Signalisierungskanal des verbindungsorientierten Datennetzes von der zweiten Einheit (E2) an die erste Einheit (E1) umfaßt.

## Claims

1. A method for the cashless payment of services which can be called from a distributed, non-connection-oriented data network and for transmitting the services from a second unit to a first unit while a connection exists from the first unit over a connection-oriented data network having a signalling channel and a message/ data channel and over the distributed, non-connection-oriented data network to the second unit, where the first unit and the second unit can be directly connected over the connection-oriented data network, comprising the following steps:
a1) setting up (S1) a connection from the first unit (E1) over the message/data channel of the connection-oriented data network and over the distributed, non-connection-oriented data network to the second unit (E2);
b1) transmitting (S2) the call number of the first unit (E1) and a request concerning a desired service to the second unit (E2) over the connection set up in the step al);
c1) checking (S4) whether the call number of the first unit (E1) is registered;
d1) if this is the case, transmitting (S33; S52) an authorization code representing an authorization for the first unit to call the service from the second unit from the second unit (E2) directly over the signalling channel of the connection-oriented data network to the first unit (E1); and
e1) if the the message/data channel of the connection-oriented data network between the second unit (E2) and the first unit (E1) is idle, setting up a connection between the second unit (E2) and the first unit (E1),
wherein cashless payment is transacted if it is found in the step c1) that the call number of the first unit is registered.

2. A method for the cashless payment of services which can be called from a distributed, non-connection-oriented data network and for transmitting the services, on authorization by a third unit, from a second unit to a first unit while a connection exists from the first unit over a connection-oriented data network having a signalling channel and a message/data channel and over the distributed, non-connection-oriented data network to the second unit, where the third unit can be connected directly to the first unit over the connection-oriented data network, comprising the following steps:
a2) setting up (S1) a connection from the first unit (E1) over the message/data channel of the connection-oriented data network and over the distributed, non-connection- oriented data network to the second unit (E2);
b2) transmitting (S2) the call number of the first unit (E1) and a request concerning the desired service to the second unit (E2) over the connection set up in the step a2);
c2) transmitting (S12) the call number of the first unit (E1) and information concerning the desired service or its price from the second unit (E2) to the third unit (E3);
d2) checking (S13) whether the call number of the first unit is registered at the third unit (E3);
e2) if this is the case, transmitting (S16) an authorization code representing an authorization for the first unit to call the service from the second unit from the third unit (E3) directly over the signalling channel of the connection-oriented data network to the first unit (E1); and
f2) if the the message/data channel of the connection-oriented data network between the third unit (E3) and the first unit (E1) is idle, setting up a connection (S19) between the third unit (E3) and the first unit (E1),
wherein cashless payment is transacted if it is found in the step d2) that the call number of the first unit is registered.

3. A method according to claim 1 or 2, comprising the following additional steps after the step of setting up (S36; S55; S19) a connection:
- returning (S42) an authorization code from the first unit to the second unit;
- checking (S43) by the second unit as to whether the authorization code is correct; and
- if this is the case, sending (S43) the desired services from the second unit over the distributed, non-connection-oriented data network and over the connection-oriented data network to the first unit (E1).

4. A method according to one of the claims 1 to 3, wherein the step of checking (S4; S13) whether the call number of the first unit (E1) is registered comprises the step of checking whether an account belonging to the call number of the first unit (E1) covers the price to be deducted for the desired service.

5. A method according to claim 3, wherein the step of returning (S42) the authorization code comprises the returning of the authorization code over the distributed, non-connection-oriented data network from the first unit to the second unit.

6. A method according to one of the claims 1 to 3, wherein
- the connection-oriented data network is the ISDN network;
- the message/data channel is the B-channel of the ISDN network;
- the signalling channel is the D-channel of the ISDN network.

7. A method according to one of the claims 1 to 6, wherein the distributed, non-connection-oriented data network is the Internet.

8. A method according to one of the preceding claims, wherein the step of transmitting (S2) the call number of the first unit comprises the transmission of a PIN number and/or a user identification and/or the call number of an authorization position responsible for the user.

9. A method according to one of the preceding claims, comprising the following additional step between the step of checking (S4) whether the call number of the first unit (E1) is registered and the step of transmitting (S16; S33; S52) the authorization code:
checking (S7) whether the user wishes the desired data to be transmitted in encoded form, in which case the step of transmitting (S33) comprises the transmitting of a coding/decoding key over the signalling channel of the connection-oriented data network from the second unit (E2) to the first unit (E1).

## Revendications

1. Procédé de paiement sans numéraire de services pouvant être sollicités depuis un réseau de données partagé, non orienté sur la communication, et de transmission des services d'une seconde unité vers une première unité pendant une communication existante de la première unité, par un réseau de données orienté sur la communication présentant un canal de signalisation et un canal d'informations/de données et par le réseau de données partagé, non orienté sur la communication, vers la seconde unité, la première unité et la seconde unité pouvant être mises en communication l'une avec l'autre directement par le réseau de données orienté sur la communication, aux étapes suivantes consistant à:
a1) établir (S1) une communication de la première unité (E1), par le canal d'informations/de données du réseau de données orienté sur la communication et par le réseau de données partagé, non orienté sur la communication, vers la seconde unité (E2);
b1) transmettre (S2) le numéro d'appel de la première unité (E1) et une demande concernant un service souhaité à la seconde unité (E2), par la communication établie à l'étape a1);
c1) vérifier (S4) si le numéro d'appel de la première unité (E1) est enregistré ;
d1) si cela est le cas, transmettre (S33 ; S52), de la seconde unité (E2) directement, par le canal de signalisation du réseau de données orienté sur la communication, à la première unité (E1) un code d'autorisation représentant une autorisation de la part de la première unité pour la sollicitation du service par la seconde unité ;
e1) si le canal d'informations/de données du réseau de données orienté sur la communication entre la seconde unité (E2) et la première unité (E1) est libre, établir une communication entre la seconde unité (E2) et la première unité (E1),
le paiement sans numéraire étant effectué s'il est constaté à l'étape c1) que le numéro d'appel de la première unité est enregistré.

2. Procédé de paiement sans numéraire de services pouvant être sollicités depuis un réseau de données partagé, non orienté sur la communication, et de transmission des services, en cas d'autorisation par une troisième unité, d'une seconde unité vers une première unité pendant une communication existante de la première unité, par le réseau de données orienté sur la communication présentant un canal de signalisation et un canal d'informations/de données et par le réseau de données partagé, non orienté sur la communication, vers la seconde unité, la troisième unité pouvant être mise en communication avec la première unité par le réseau de données orienté sur la communication, aux étapes suivantes consistant à:
a2) établir (S1) une communication de la première unité (E1), par le canal d'informations/de données du réseau de données orienté sur la communication et par le réseau de données partagé, non orienté sur la communication, vers la seconde unité ;
b2) transmettre (S2) le numéro d'appel de la première unité (E1) et une demande concernant un service souhaité à la seconde unité (E2) par la communication établie à l'étape a2) ;
c2) transmettre (S12) le numéro d'appel de la première unité (E1) et une information concernant le service souhaité ou son prix de la seconde unité (E2) à la troisième unité (E3) ;
d2) vérifier (S13) si le numéro d'appel de la première unité (E1) est enregistré auprès de la troisième unité (E3) ;
e2) si cela est le cas, transmettre (S16), de la troisième unité (E3) directement, par le canal de signalisation du réseau de données orienté sur la communication, à la première unité (E1) un code d'autorisation représentant une autorisation de la part de la première unité pour l'appel du service par la seconde unité ; et
f2) si le canal d'informations/de données du réseau de données orienté sur la communication entre la troisième unité (E3) et la première unité (E1) est libre, établir une communication (S19) entre la troisième unité (E3) et la première unité (E1),
le paiement sans numéraire étant effectué s'il est constaté à l'étape d2) que le numéro d'appel de la première unité est enregistré.

3. Procédé suivant la revendication 1 ou 2, aux autres étapes suivantes, après l'étape d'établissement (S36 ; S55 ; S19) d'une communication, consistant à :
renvoyer (S42) le code d'autorisation de la première unité vers la seconde unité ;
vérifier (S43), par la seconde unité, si le code d'autorisation est correct ; et
si cela est le cas, envoyer (S43) les services souhaités de la seconde unité, par le réseau de données partagé, non orienté sur la communication, vers la première unité (E1).

4. Procédé suivant l'une des revendications 1 à 3, dans lequel l'étape consistant à vérifier (S4 ; S13) si le numéro d'appel de la première unité (E1) est enregistré comprend l'étape consistant à vérifier si un compte appartenant au numéro d'appel de la première unité (E1) est couvert pour le montant du débit du prix du service souhaité.

5. Procédé suivant la revendication 3, dans lequel l'étape consistant à renvoyer (S42) le code d'autorisation comprend le renvoi du code d'autorisation par le réseau de données partagé, non orienté sur la communication, de la première unité vers la seconde unité.

6. Procédé suivant l'une des revendications 1 à 5, dans lequel
- le réseau de données orienté sur la communication est le réseau RNIS ;
- le canal d'informations/de données est le canal B du réseau RNIS ; et
- le canal de signalisation est le canal D du réseau RNIS.

7. Procédé suivant l'une des revendications 1 à 6, dans lequel le réseau de données partagé, non orienté sur la communication est l'Internet.

8. Procédé suivant l'une des revendications précédentes, dans lequel l'étape consistant à transmettre (S2) le numéro d'appel de la première unité comprend la transmission d'un numéro PIN et/ou d'une identification d'utilisateur et/ou du numéro d'appel d'un lieu d'autorisation compétent pour l'utilisateur.

9. Procédé suivant l'une des revendications précédentes, à l'étape supplémentaire suivante, entre l'étape consistant à vérifier (S4) si le numéro d'appel de la première unité (E1) est enregistré et l'étape consistant à transmettre (S16; S33 ; S52) le code d'autorisation, consistant à :
vérifier (S7) si l'utilisateur souhaite la transmission des données souhaitées sous forme encryptée, l'étape de transmission (S33) comprenant, dans ce cas, la transmission d'une clé de codage/décodage, par le canal de signalisation du réseau de données orienté sur la communication, de la seconde unité (E2) à la première unité (E1).
